# EUROPÄISCHE PATENTANMELDUNG

(11) **EP 4 729 222 A1**
(43) Veröffentlichungstag der Anmeldung: **22.04.2026**
(21) Anmeldenummer: 25159707.6
(22) Anmeldetag: 24.02.2025
(51) Int. Cl.: B23G 5/06, B23C 5/10, B23D 77/00, B23B 31/00

(54) **MODULARES ZERSPANUNGSWERKZEUG**

(30) Priorität: 15.10.2024 DE 102024129925
(71) Anmelder: Gühring KG, 72458 Albstadt (DE)
(72) Erfinder: Necetin, Emin, 72488 Sigmaringen (DE); Käppeler, Tim, 72511 Bingen (DE); Bachman, Norbert, 407055 Baciu / Cluj (RO)
(74) Vertreter: Winter, Brandl - Partnerschaft mbB

(57) **Zusammenfassung**

Es wird ein modulares Zerspanungswerkzeug (1; 40) mit einem sich entlang einer Werkzeugachse erstreckenden Grundkörper (2) und einem über eine formschlüssige Kupplung mit dem Grundkörper (2) verbundenen Werkzeugkopf (3) bereitgestellt, wobei die formschlüssige Kupplung aus miteinander in Eingriff stehenden Stirnverzahnungen (4) am Grundkörper (2) und Werkzeugkopf (3) gebildet ist, die jeweils eine Vielzahl von um die Werkzeugachse herum äquidistant verteilten, radial verlaufenden Zähnen (5) aufweisen. Je Stirnverzahnung (4) liegen die Kopfflächen (7) der Zähne (5) auf einer virtuellen Innenkegelfläche im Werkzeugkopf (3) oder Grundkörper (2) mit der Werkzeugachse als Kegelachse, und sind die Kopfflächen (7) der Zähne (5) konkav gerundet sind.

## Beschreibung

Die Erfindung betrifft ein modulares Zerspanungswerkzeug mit einem sich entlang einer Werkzeugachse erstreckenden Grundkörper und einem mit dem Grundkörper formschlüssig verbundenen Werkzeugkopf.

Bei einem in der EP 4201560 A1 vorgeschlagenen Zerspanungswerkzeug wird eine formschlüssige Verbindung zwischen einem Grundkörper und einem Werkzeugkopf durch miteinander in Eingriff stehende Stirnverzahnungen am Grundkörper und Werkzeugkopf erreicht. Jede der Stirnverzahnungen weist eine Vielzahl von um die Werkzeugachse herum angeordnete, durch Zahnlücken voneinander getrennte Zähne auf. Der Werkzeugkopf ist mittels einer durch ein Durchgangsloch im Werkzeugkopf gehenden und in eine Gewindebohrung im Grundkörper geschraubten Spannschraube axial gegen den Grundkörper gespannt. Nach der EP 4201560 A1 sollen die Zahnflanken lediglich im Zahnkopfbereich Flankenflächen als Anschlagflächen für einen eingreifenden Zahn der anderen Stirnverzahnung bilden. Im Sinne einer einfacheren Bearbeitung der Anschlagflächen schlägt die EP 4201560 A1 weiter vor, dass zwei Anschlagflächen zweier unterschiedlicher Zähne einer Stirnverzahnung jeweils eine gemeinsame diagonal verlaufende Längsachse aufweisen, wodurch sich diese zwei Anschlagflächen gleichzeitig mit einem Bearbeitungswerkzeug, vorzugsweise einer Schleifscheibe, bearbeiten lassen.

Allerdings ist bei dem in der EP 4201560 A1 vorgeschlagenen Zerspanungswerkzeug die Stirnverzahnung am Grundkörper unterschiedlich zu der Stirnverzahnung am Werkzeugkopf ausgebildet. Konkret erstrecken sich bei der am Grundkörper vorgesehenen Stirnverzahnung die Scheitelflächen der Zähne in einer Ebene quer zur Werkzeugachse, während sich die Bodenflächen der Zahnlücken jeweils unter einem Winkel schräg zur Werkzeugachse erstrecken. In den Bodenflächen der Zahnlücken können Austrittsöffnungen von Kühlmittelkanälen liegen. Bei der am Werkzeugkopf vorgesehenen Stirnverzahnung erstrecken sich dagegen sowohl die Scheitelflächen der Zähne als auch die Bodenflächen der Zahnlücken jeweils in einer Ebene quer zur Werkzeugachse. Im zusammengebauten Zustand sind die Scheitelflächen der Zähne der Stirnverzahnung des Werkzeugkopfs daher von den Bodenflächen der Zahnlücken der Stirnverzahnung des Grundkörpers beabstandet, wodurch über die Kühlmittelkanäle zugeführtes Kühlmittel in Richtung der am Werkzeugkopf ausgebildeten Schneiden geleitet wird.

Die Stirnverzahnungen am Grundkörper und Werkzeugkopf sind also unterschiedlich ausgebildet. Im Fall der am Grundkörper vorgesehenen Stirnverzahnung können zudem lediglich die oben erwähnten Anschlagflächen, d.h. Teilflächen der Zahnflanken, zweier Zähne gleichzeitig mit einem Bearbeitungswerkzeug bearbeitet werden. Alle restlichen Flächen, d.h. die Zahnscheitelflächen, Zahnlückenbodenflächen, und an die Anschlagflächen angrenzenden Teilflächen der Zahnflanken, der Stirnverzahnung müssen jedoch separat bearbeitet werden.

Ausgehend von dem aus der EP 4201560 A1 bekannten Zerspanungswerkzeug liegt der Erfindung nun die Aufgabe zugrunde, ein modulares Zerspanungswerkzeug bereitzustellen, bei dem sich die axial gegenüberliegenden Stirnverzahnungen des Werkzeugkopfs und Grundkörpers einfacher und wirtschaftlicher herstellen lassen.

Diese Aufgabe wird durch ein modulares Zerspanungswerkzeug gemäß Anspruch 1 gelöst. Die Unteransprüche betreffen vorteilhafte Ausgestaltungen.

Ein modulares Zerspanungswerkzeug, das beispielsweise als ein Bohr-, Fräs-, Reib- oder Gewindewerkzeug, insbesondere als Gewindefräswerkzeug, ausgeführt sein kann, hat einen sich entlang einer Dreh- bzw. Werkzeugachse erstreckenden Grundkörper und einen axial formschlüssig gegen den Grundkörper verspannten Werkzeugkopf. Der Formschluss zwischen dem Grundkörper und dem Werkzeugkopf gelingt durch miteinander in Eingriff stehende, komplementäre ausgebildete Stirnverzahnungen an den Stirnendabschnitten des Grundkörpers und Werkzeugkopfs. Die Stirnverzahnungen weisen jeweils eine gleiche Vielzahl von um die Werkzeugachse herum äquidistant verteilten, radial verlaufenden und durch Zahnlücken voneinander getrennte Zähne auf. Die Zähne und dementsprechend auch die zwischen den Zähnen liegenden Zahnlücken jeder Stirnverzahnung, im Besonderen deren Winkelhalbierende, erstrecken sich demnach jeweils in die Werkzeugachse enthaltenden Längsschnittebenen des Zerspanungswerkzeugs. Insofern können die Stirnverzahnungen auch als Plan- oder Hirth-Verzahnungen bezeichnet werden.

Eine Zahnlücke ist der ausgesparte Bereich zwischen zwei in Werkzeugdreh- oder Werkzeugumfangsrichtung nebeneinanderliegenden Zähnen.

Im Sinne einer einfachen und wirtschaftlichen Herstellung der Stirnverzahnungen ist vorgesehen, dass die Kopfflächen der Zähne, d.h. die Zahnkopfflächen, jeweils auf einer (virtuellen) Innenkegelfläche im Werkzeugkopf oder Grundkörper mit der Werkzeugachse als Kegelachse liegen. Die Kegelwinkel der Innenkegel im Werkzeugkopf und Grundkörper sind gleich groß. Der Winkel zwischen einer Winkelhalbierenden der Zahnkopffläche eines Zahns und der Werkzeugachse entspricht dem halben Kegelwinkel des Innenkegels einer Stirnverzahnung. Die Zahnköpfe erstrecken sich daher von radial außen nach radial innen unter einem dem halben Kegelwinkel entsprechenden Winkel schräg zur Werkzeugachse. Folglich nehmen die Zahnhöhen der Zähne je Stirnverzahnung von radial außen nach radial innen ab. Des Weiteren sind die Kopfflächen der Zähne der jeweiligen virtuellen Innenkegelfläche entsprechend konkav gerundet.

Der über die Werkzeugspitze gemessene Kegelwinkel der (virtuellen) Innenkegelfläche kann im Bereich von 136° bis 144°, beispielsweise von 140° bis 142°, liegen.

Die Stirnverzahnungen lassen sich in der Weise erzeugen, dass in Werkzeugkopf- und Grundkörperrohlinge zunächst sich stirnseitig öffnende Innenkegel mit der Werkzeugachse als Kegelachse eingebracht werden. Die Innenkegel, d.h. die Innenkegelflächen, können durch ein spanabhebendes Fertigungsverfahren, beispielsweise mit Hilfe eines dem Innenkegel entsprechenden konturierten Fräs-, Senk- oder Schleifwerkzeugs, oder ein spanloses Fertigungsverfahren, beispielsweise durch Erodieren, ohne größeren Aufwand gefertigt werden.

Nach dem Einbringen der Innenkegel können die Stirnverzahnungen in der Weise weiterbearbeitet und fertiggestellt werden, dass die Zahnlücken durch eine weitere Bearbeitung der die Innenkegel aufweisenden Endabschnitte der Werkzeugkopf- und Grundkörperrohlinge ausgespart werden. Analog zu den Innenkegeln können auch die Zahnlücken durch ein spanabhebendes Fertigungsverfahren, beispielsweise mit Hilfe eines dem durch die Zahnflanken aufgespannten Öffnungswinkel der Zahnlücken entsprechenden konturierten Fräs- oder Schleifwerkzeugs, oder ein spanloses Fertigungsverfahren, beispielsweise durch Erodieren, ohne größeren Aufwand ausgespart werden.

Beispielsweise kann eine erste Zahnlücke mit Hilfe einer von radial außen nach radial innen unter einem Winkel schräg zur Werkzeugachse geführten Schleifscheibe in den die Innenkegelflächen enthaltenden Endabschnitt des Werkzeugkopf- und Grundkörperrohlings eingeschliffen werden. Durch eine wiederholte Drehung des Werkzeugkopfs- bzw. Grundkörperrohlings oder der Schleifscheibe um die Werkzeugachse um ein der Zahnteilung entsprechendes Winkelmaß und weitere entsprechende Schleifvorgänge können der Werkzeugkopf- und Grundkörperrohling schließlich weiterbearbeitet werden, bis alle Zahnlücken und damit alle Zähne ausgebildet sind. Beispielsweise sind bei einer Stirnverzahnung mit drei Zähnen drei Schleifvorgänge, bei einer Stirnverzahnung mit vier Zähnen vier Schleifvorgänge notwendig.

Die nach Ausbildung der Zahnlücken verbleibenden Restflächen der Innenkegelflächen im Werkzeugkopf und Grundkörper bilden dann jeweils die Kopfflächen der durch die Zahnlücken voneinander getrennten Zähne der Stirnverzahnungen. Die Kopfflächen der Zähne sind daher der Innenkegelfläche entsprechend konkav gerundet.

Die Stirnverzahnungen lassen sich daher durch fertigungstechnisch einfach zu bewerkstelligende Verfahren einfach und wirtschaftlich fertigen.

Die in Werkzeugdreh- oder Werkzeugumfangsrichtung auf Höhe der Kopfflächen gemessenen Zahndicken der Zahnköpfe und die Zahnflanken der Zähne ergeben sich zwangsläufig durch die Zahnlückenaussparungen, die im Besonderen so gefertigt werden können, dass die Zähne von radial innen nach außen gleichbleibende Zahndicken aufweisen.

Der durch die Zahnflanken aufgespannte Öffnungswinkel einer Zahnlücke kann abhängig von der Anzahl der Zähne je Stirnverzahnung im Bereich von 80° bis 130° liegen.

Die Zahnlücken werden vorzugsweise in der Weise ausgebildet, dass sich die Grundflächen der jeweils zwischen zwei Zähnen liegenden Zahnlücken parallel zu den Kopfflächen der in den Zahnlücken aufgenommenen Zähne erstrecken. Die Winkelhalbierenden der Grundflächen der Zahnlücken einer Stirnverzahnung können daher auf einer (virtuellen) Außenkegelfläche im Werkzeugkopf oder Grundkörper mit der Werkzeugachse als Kegelachse liegen.

Die Winkelhalbierenden der Grundflächen der Zahnlücken können demnach in der Weise gegensinnig zu den Zahnkopfflächen schräg zur Werkzeugachse bzw. einer Werkzeugquerschnittsebene verlaufen, dass die Tiefe der Zahnlücken von radial außen nach radial innen abnimmt. Der über die Werkzeugspitze gemessene Kegelwinkel der (virtuellen) Außenkegelfläche kann im Bereich von 216° bis 224°, beispielsweise von 218° bis 220° liegen.

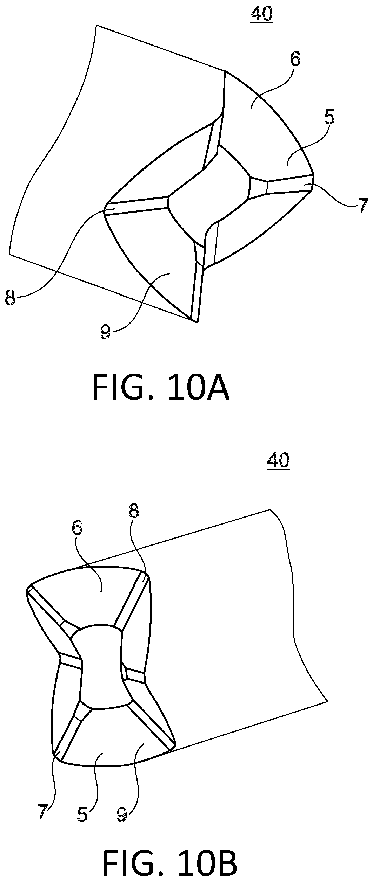

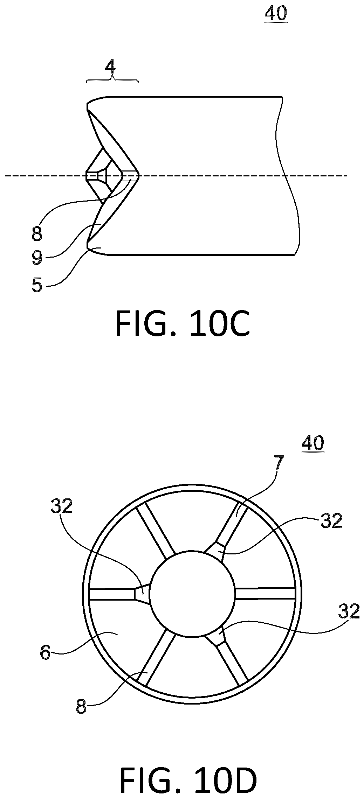

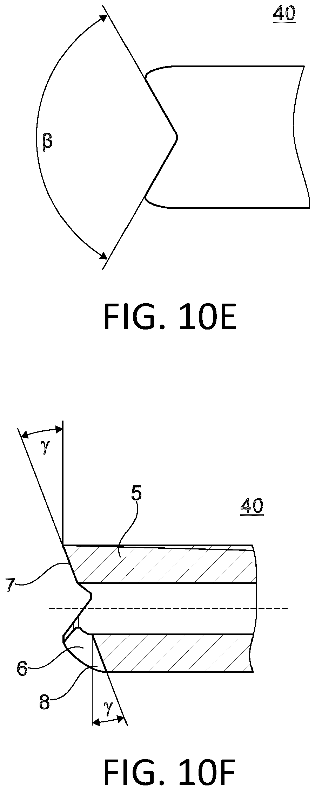

Die über die Werkzeugspitze gemessenen Kegelwinkel der Innenkegelfläche und der Außenkegelfläche sind vorzugsweise so gewählt, dass die Innenkegelfläche und die Außenkegelfläche einen im Vorzeichen zwar verschiedenen, im Betrag aber gleich großen Winkel, von beispielsweise 19° bis 20°, mit einer Ebene quer zur Werkzeugachse (Werkzeugquerschnittsebene) einschließen (vgl. dazu die Winkel γ in FIG. 10F). Anders ausgedrückt liegen die Innenkegelfläche und die Außenkegelfläche unter einem im Betrag gleich großen Winkel schräg zu einer Werkzeugquerschnittsebene bzw. zur Werkzeugachse.

Des Weiteren können die Grundflächen der Zahnlücken je Stirnverzahnung konkav gerundet sein. In diesem Fall können die zwischen den Zahnkopfflächen der Zähne und den Grundflächen der Zahnlücken der miteinander in Eingriff stehenden Stirnverzahnungen gebildeten Fügespalte als Kanäle genutzt werden, um über einen im Grundkörper liegendes Kanalsystem zugeführtes Kühlschmiermittel an die Werkzeugumfangseite nach außen zu leiten oder umgekehrt, z.B. bei einer Vakuumbeaufschlagung, Schmutz und/oder Späne von radial außen nach radial innen zu leiten und über das Kanalsystem im Grundkörper abzuführen.

Die ineinandergreifenden Stirnverzahnungen am Werkzeugkopf und Grundkörper sind vorzugsweise so ausgebildet, dass sie ausschließlich an den Zahnflanken ihrer Zähne aneinander anliegen, d.h. dass die Drehmomentübertragung und Axial- und Radialkraft ausschließlich über die Zahnflanken erfolgt. Durch eine flächige Anlage nur im Bereich der Zahnflanken wird eine zuverlässige Drehmomentübertragung erreicht, weil statische Unbestimmtheiten vermieden oder minimiert werden.

Die Befestigung des Werkzeugkopfs am Grundkörper erfolgt bevorzugt durch Verschraubung. Zu diesem Zweck kann der Werkzeugkopf ein mittig liegendes Schraubenloch und der Grundkörper eine mit dem Schraubenloch koaxial fluchtende Gewindebohrung aufweisen. Eine durch das Schraubenloch hindurch in die Gewindebohrung im Grundkörper eingeschraubte Spannschraube fixiert dann den Werkzeugkopf am Grundkörper.

Das Zerspanungswerkzeug kann je Stirnverzahnung eine gerade Zahl von, beispielsweise vier, Zähnen, oder eine ungerade Zahl von, beispielsweise drei, Zähnen aufweisen. Bei einer geraden Zahl von Zähnen sind die Zähne in der Weise um die Werkzeugachse herum verteilt, dass jeweils zwei Zähne einander diametral gegenüberliegen. Bei einer ungeraden Zahl von Zähnen sind die Zähne in der Weise um die Werkzeugachse verteilt, dass jeweils ein Zahn einer Zahnlücke diametral gegenüberliegt.

Der Grundkörper und der Werkzeugkopf können aus denselben oder unterschiedlichen Materialien hergestellt sein. Beispielsweise kann der Grundkörper aus einem Werkzeugstahl und der Werkzeugkopf aus Vollhartmetall oder Keramik hergestellt sein.

Weitere Einzelheiten, Merkmale und Vorteile ergeben sich aus der nachfolgenden Beschreibung bevorzugter Ausführungsformen und anhand der Zeichnungen. Es zeigen:
FIG. 1 eine erste Ausführungsform eines modularen Zerspanungswerkzeugs;
FIG. 2A und FIG. 2B perspektivische Ansichten des Zerspanungswerkzeugs aus FIG. 1 in auseinandergezogenen Darstellungen;
FIG. 3A bis FIG. 3F verschiedene Ansichten des Werkzeugkopfs des Zerspanungswerkzeugs aus FIG. 1;
FIG. 4A bis FIG. 4D verschiedene Ansichten des Grundkörpers des Zerspanungswerkzeugs aus FIG. 1;
FIG. 5A bis FIG. 5E verschiedene Ansichten eines Werkzeugkopfrohlings des Zerspanungswerkzeugs aus FIG. 1;
FIG. 6A bis FIG. 6E verschiedene Ansichten des Werkzeugkopfrohlings aus FIG. 5A bis FIG. 5E mit einem sich stirnseitig öffnenden Innenkegel;
FIG. 7A bis FIG. 7E verschiedene Ansichten des Werkzeugkopfrohlings aus FIG. 6A bis FIG. 6E mit einer Zahnlücke;
FIG. 8A bis FIG. 8E verschiedene Ansichten des Werkzeugkopfrohlings aus FIG. 7A bis FIG. 7E mit zwei Zahnlücken und einem Zahn;
FIG. 9A bis FIG. 9E verschiedene Ansichten des Werkzeugkopfrohlings aus FIG. 8A bis FIG. 8E mit vier Zahnlücken und vier Zähnen;
FIG. 10A bis FIG. 10F verschiedene Ansichten eines Werkzeugkopfrohlings einer zweiten Ausführungsform eines modularen Zerspanungswerkzeugs; und
Fig. 11 eine modifzierte Ausführungsform eines Zerspanungswerkzeugs zeigt.

### Erste Ausführungsform

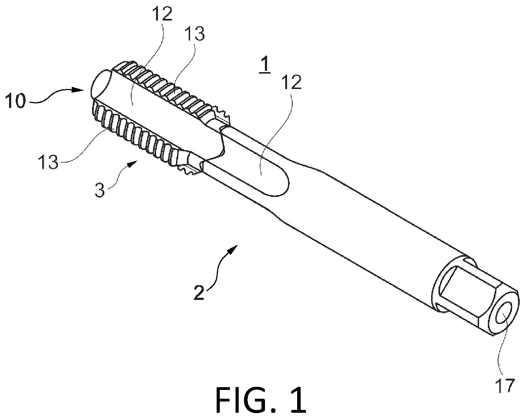

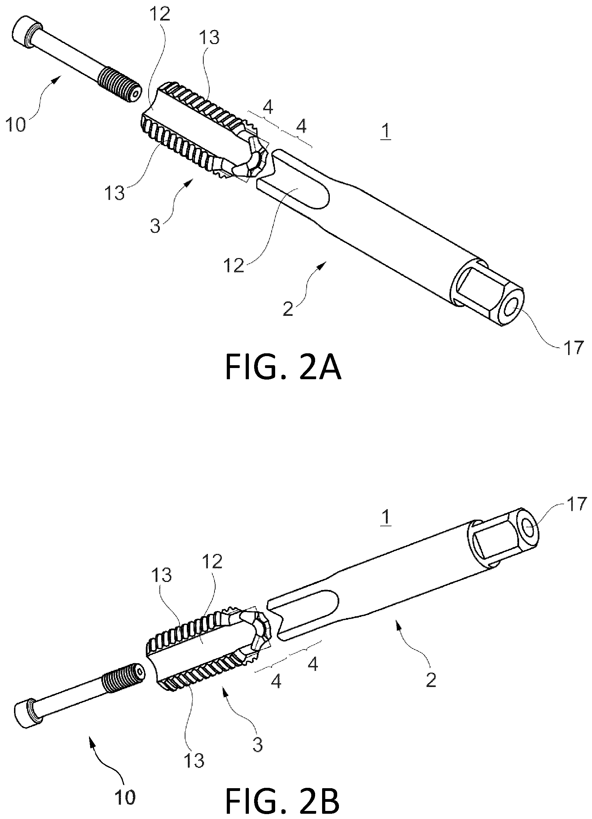

FIG. 1 zeigt eine erste Ausführungsform eines modularen Zerspanungswerkzeugs 1 in Gestalt eines Gewindefräswerkzeugs. Das Zerspanungswerkzeug 1 ist gemäß FIG. 2A und FIG. 2B aus einem sich entlang einer Längsmittel- bzw. Werkzeugachse erstreckenden Grundkörper 2, einem axial formschlüssig gegen den Grundkörper 2 verspannten Werkzeugkopf 3 und einer den Werkzeugkopf 3 am Grundkörper 2 befestigenden Spannschraube 10 zusammengesetzt.

Der Werkzeugkopf 3 weist in der ersten Ausführungsform vier durch Spannuten 12 voneinander getrennte Gewindeschneidstollen 13 auf. Die Spannuten 12 laufen, wie es in FIG. 1, FIG. 2A und FIG. 2B gezeigt ist, im Grundkörper 2 aus. Der Grundkörper 2 bildet an seinem vom Werkzeugkopf 3 abgewandten Längenendabschnitt einen Schaft zum Einspannen und Halten des Gewindefräswerkzeugs in einem Werkzeugalter auf. Bei den Gewindeschneidstollen 13 und Spannuten 12 handelt es sich wie beim Schaft um an sich bekannte Gestaltungsmerkmale, so dass diese Merkmale nicht weiter erläutert werden müssen.

In der ersten Ausführungsform ist der Grundkörper 2 aus einem Werkzeugstahl und der Werkzeugkopf 3 aus Vollhartmetall oder Keramik hergestellt.

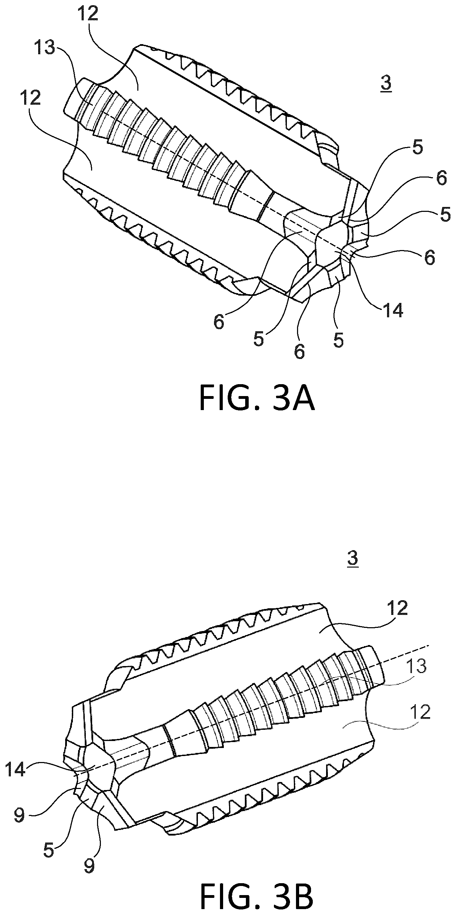

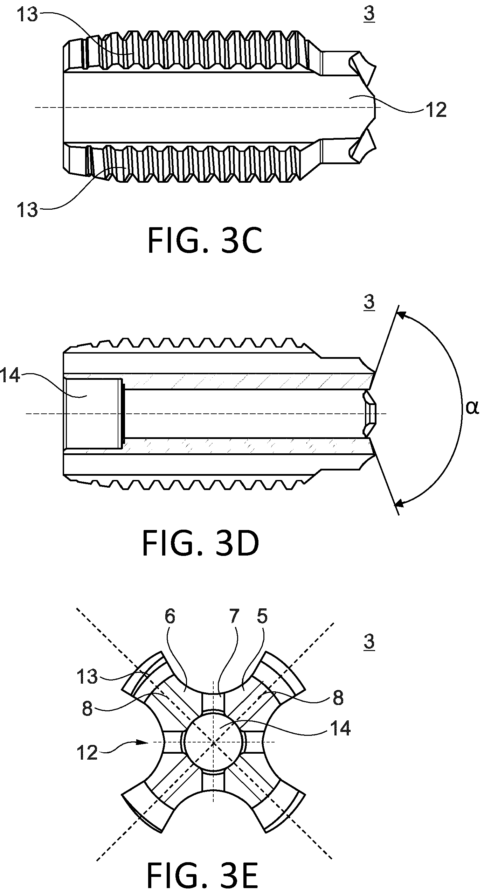

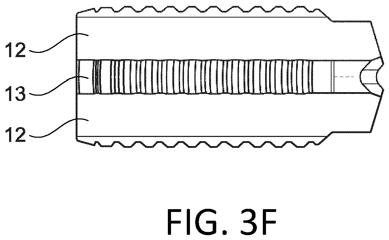

Die Spannschraube 10 befestigt den Werkzeugkopf 3 am Grundkörper 2. Zu diesem Zweck weist der Werkzeugkopf 3, wie es beispielsweise in FIG. 3C gezeigt ist, eine radial mittige Stufenbohrung 14 auf, in der die Spannschraube mit ihrem Schraubenkopf axial abgestützt angeordnet ist. Der Gewindeabschnitt der Spannschraube 10 ist in einer axial an die Stufenbohrung anschließenden, radial mittigen Gewindebohrung 15 im Grundkörper 2 verschraubt. Die axial gegenüberliegenden Enden der Stufenbohrung 14 und Gewindebohrung 15 können jeweils eine durch eine Senkbearbeitung erzeugte Fase aufweisen.

Der Formschluss zwischen dem Werkzeugkopf 3 und dem Grundkörper 2 wird durch miteinander in Eingriff stehende, komplementäre ausgebildete Stirnverzahnungen 4 an den axial gegenüberliegenden Stirnseiten des Werkzeugkopfs 3 und Grundkörpers 2 erreicht.

Die Stirnverzahnungen 4 weisen in der ersten Ausführungsform jeweils vier um die Werkzeugachse herum äquidistant verteilte, radial verlaufende und durch Zahnlücken 6 voneinander getrennte Zähne 5 auf. Die Zähne 5 und dementsprechend auch die Zahnlücken 6 sind damit von der Werkzeugachse aus in der Weise strahlenförmig angeordnet, dass jeweils zwei Zähne 5 einander diametral gegenüberliegen.

Anders ausgedrückt erstrecken sich die Zähne 5 und dementsprechend auch die Zahnlücken 6 jeder Stirnverzahnung, im Besonderen deren Winkelhalbierende, in die Werkzeugachse enthaltenden Längsschnittebenen des Zerspanungswerkzeugs 1, d.h. in Axialrichtung gesehen radial. Eine Zahnlücke 6 ist der ausgesparte Bereich zwischen den Zahnflanken 9 zweier in Werkzeugumfangs- oder Werkzeugdrehrichtung nebeneinanderliegender Zähne 5.

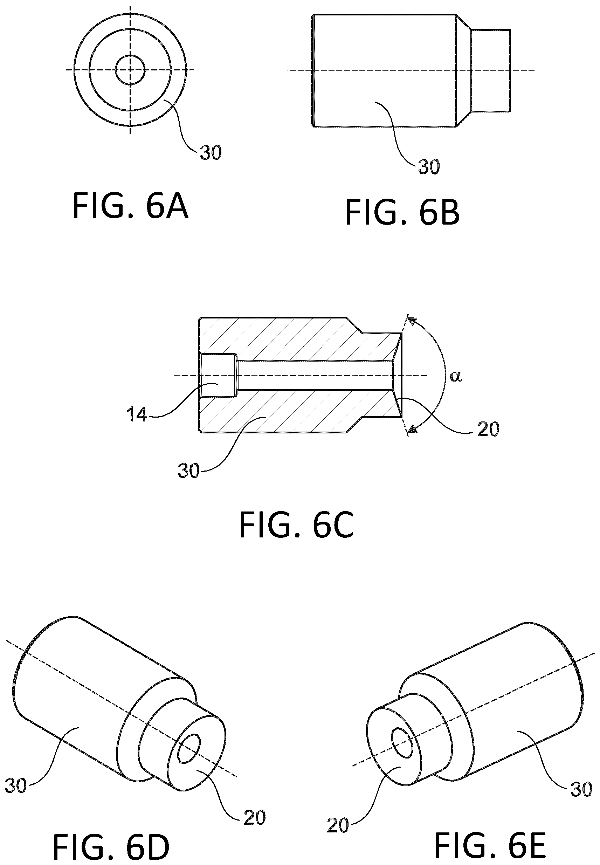

Die Zahnkopfflächen 7 der Zähne 5 der Stirnverzahnungen 4 liegen jeweils auf einer virtuellen Innenkegelfläche im Werkzeugkopf 3 oder Grundkörper 2 mit der Werkzeugachse als Kegelachse. Die Zahnköpfe verlaufen daher von radial außen nach radial innen unter einem durch den Kegelwinkel α (vgl. Fig. 3D, 6C) der Innenkegelflächen bedingten Winkel schräg zur Werkzeugachse bzw. zu einer Werkzeugquerschnittsfläche. Folglich nimmt die Zahnhöhe der Zähne 5 je Stirnverzahnung 4 von radial innen nach radial außen zu.

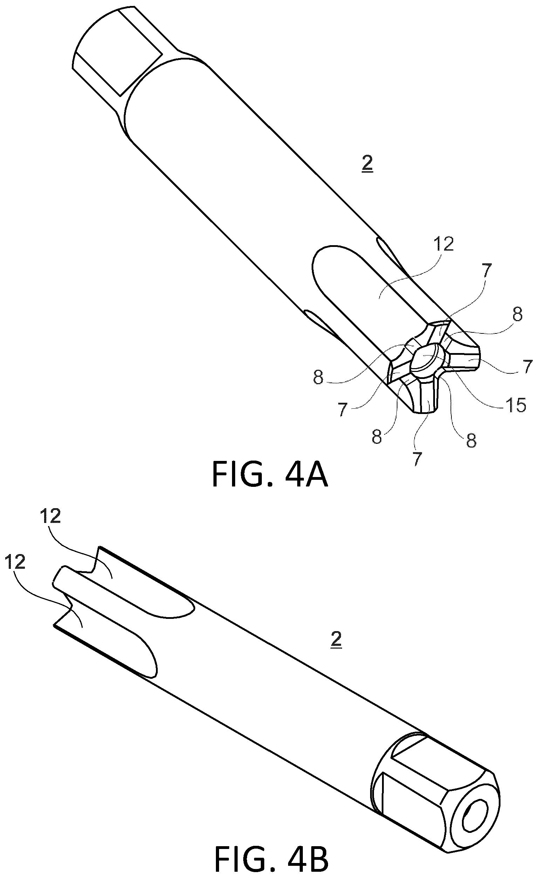

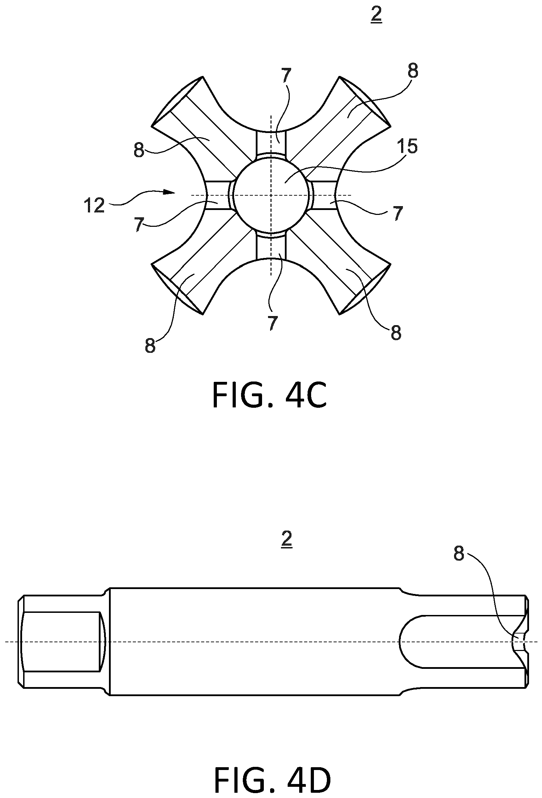

Die Zahnkopfflächen 7 sind den Innenkegelflächen entsprechend konkav gerundet. Die in Werkzeugumfangsrichtung gemessenen Zahndicken der Zahnköpfe der Zähne 5 ergeben sich durch die Zähne 5 voneinander trennenden Zahnlückenaussparungen. Wie beispielsweise FIG. 3A, FIG. 3E, FIG. 4B und FIG. 4D zeigen, weisen die Zahnkopfflächen 7 der Zähne 5 jeder Stirnverzahnung über die in radialer Richtung gemessene Zahnbreite konstant bleibende Zahndicken auf.

Des Weiteren liegen die Grundflächen 8, konkret deren Winkelhalbierende (in Fig. 3E gestrichelt angedeutet), der zwischen den Zähnen 5 liegenden Zahnlücken 6 jeder Stirnverzahnung 4 auf einer virtuellen Außenkegelfläche im Werkzeugkopf 3 oder Grundkörper 2 mit der Werkzeugachse als Kegelachse. Die Winkelhalbierenden und damit die Grundflächen 8 der Zahnlücken 6 verlaufen daher gegensinnig zu den Zahnkopfflächen 7 schräg zur Werkzeugachse bzw. zu einer Werkzeugquerschnittsebene (vgl. dazu die Winkel γ in FIG. 10F), so dass die Tiefe der Zahnlücken 6 von radial innen nach radial außen zunimmt.

Der Betrag des Winkels der Außenkegelfläche relativ zur Werkzeugachse bzw. zu einer Werkzeugquerschnittsebene ist gleich dem Betrag des Winkels der Innenkegelfläche relativ zur Werkzeugachse bzw. Werkzeugquerschnittsebene. Der Betrag des Winkels der Außenkegelfläche und der Betrag des Winkels der Innenkegelfläche zu einer Werkzeugquerschnittsebene des Zerspanungswerkzeugs liegen in der ersten Ausführungsform bei 19,64°. Der Öffnungswinkel β der Zahnlücken bzw. zweier in Umfangsrichtung nebeneinanderliegender Zahnflanken beträgt in der ersten Ausführungsform 90°.

In dem in FIG. 1 gezeigten Zustand, in dem die Stirnverzahnungen 4 am Werkzeugkopf 3 und Grundkörper 2 formschlüssig ineinandergreifen, liegen die Zähne 5 ausschließlich an ihren Zahnflanken 9, also an von den Zahnkopfflächen 7 bis zu den Grundflächen 8 der Zahnlücken 6 erstreckenden Zahnflankenflächen, vollflächig aneinander an.

FIG. 2A und FIG. 2B zeigen, dass die Zahnköpfe der Stirnverzahnung 4 am Werkzeugkopf 3 in Werkzeugumfangsrichtung gesehen jeweils im Bereich einer Spannut 12 liegen. Umgekehrt liegen die die Zahnköpfe der Stirnverzahnung 4 am Grundkörper 2 in Werkzeugumfangsrichtung gesehen jeweils im Bereich zwischen zwei im Grundkörper 2 auslaufenden Spannuten 12. Die von radial innen nach radial außen gemessene Erstreckungslänge der Zähne 5 am Werkzeugkopf 3 ist daher im Vergleich zur Erstreckungslänge der Zähne 5 am Grundkörper 2 verkürzt. Diese Verteilung der Zähne 5 am Werkzeugkopf 3 und Grundkörper 2 ist aber nicht zwingend, so dass die Zahnköpfe der Stirnverzahnung 4 am Werkzeugkopf in Werkzeugumfangsrichtung gesehen jeweils im Bereich zwischen zwei Spannuten 12 und die Zahnköpfe der Stirnverzahnung 4 am Grundkörper 2 in Werkzeugumfangsrichtung gesehen jeweils im Bereich einer auslaufenden Spannut 12 liegen können.

An die oben erwähnte Gewindebohrung im Grundkörper 2 schließt axial eine den Grundkörper 2 bis zum Schaftende durchdringende radial mittige Bohrung an. FIG. 1, FIG. 2A und FIG. 2B zeigen die an dem Werkzeugkopf abgewandten Schaftende liegende Bohrungsöffnung 17. Zum Werkzeugkopf 3 hin zweigen von der mittigen Bohrung (nicht gezeigte) Zweigbohrungen ab, die in der ersten Ausführungsform in Fügespalten zwischen den Stirnverzahnungen am Werkzeug und Grundkörper 2 münden. Diese Fügespalte ergeben sich durch die konkav gerundeten Zahnkopfflächen 7 und die axial gegenüberliegenden konkav gerundeten Grundflächen 8 der Zahnlücken 6. Diese Fügespalte können als Kanäle genutzt werden können, um über die im Grundkörper 2 liegende mittige Bohrung zugeführtes Kühlschmiermittel an die Werkzeugmantelseite nach außen zu leiten oder umgekehrt, z.B. bei einer Vakuumbeaufschlagung, Späne von radial außen nach radial innen zu leiten und über die mittige Bohrung im Grundkörper 2 abzuführen.

Die mittige Bohrung bildet daher mit den Zweigbohrungen ein im Grundkörper 2 ausgebildetes Kanalsystem, das beispielsweise zur Kühlschmiermittelversorgung des Werkzeugkopfs 3 oder zur Späneabfuhr dienen kann.

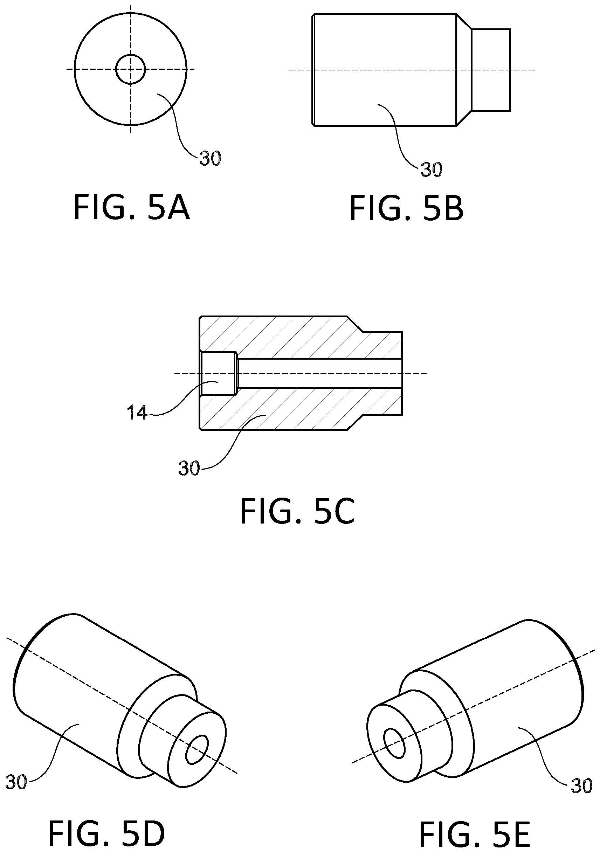

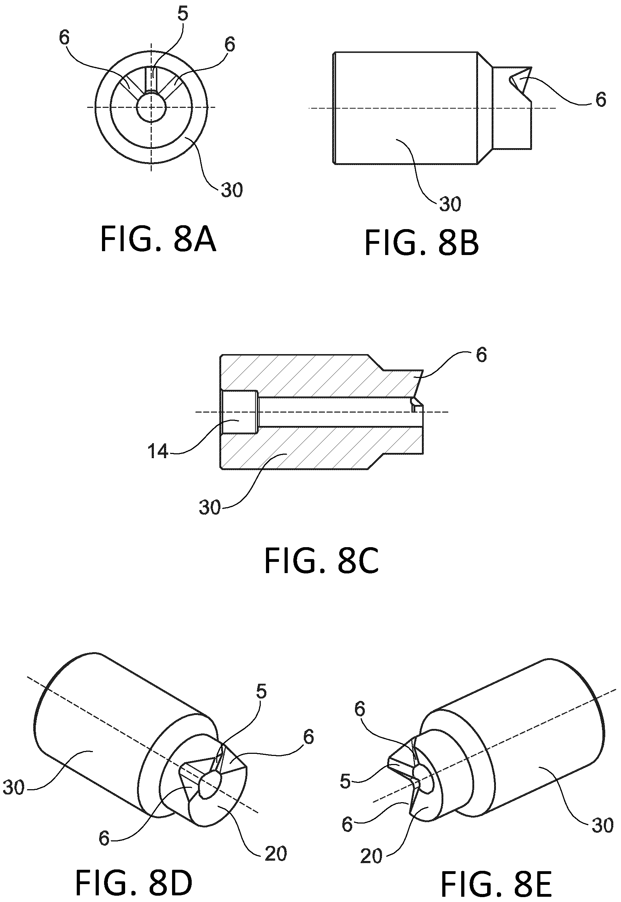

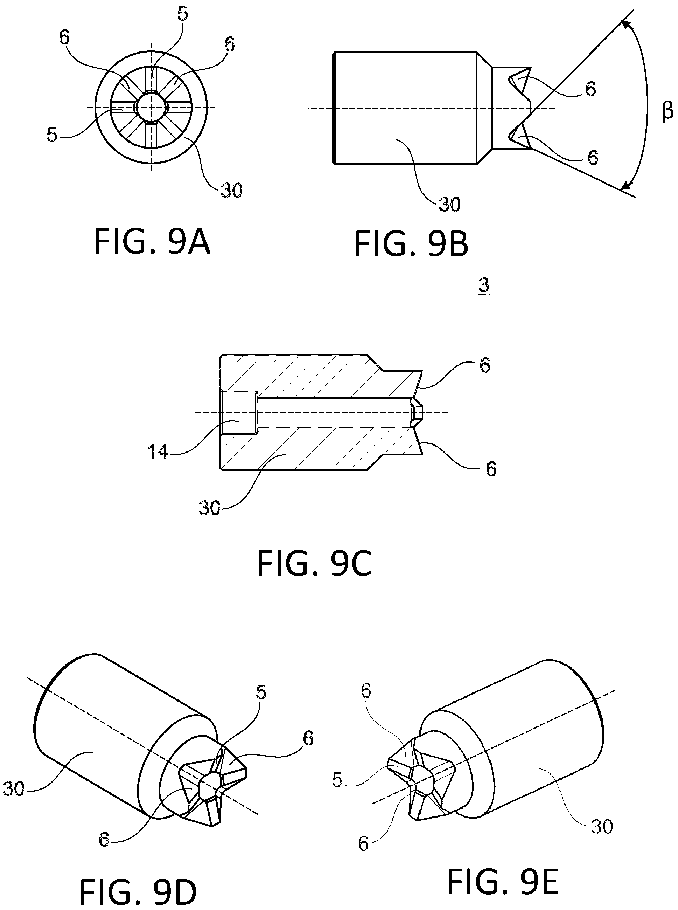

Die Herstellung der Stirnverzahnungen 4 am Werkzeugkopf 3 und Grundkörper 2 wird mit Hilfe der FIG. 5A bis 9E erläutert. FIG. 5A bis 9E zeigen Verfahrensschritte zur Herstellung der Stirnverzahnung 4 am Werkzeugkopf 3. Die komplementäre Stirnverzahnung 4 am Grundkörper 3 kann analog zur Stirnverzahnung 4 am Werkzeugkopf 3 hergestellt werden.

FIG. 5A bis FIG. 5E zeigen zunächst verschiedene Ansichten eines noch unbearbeiteten Werkzeugkopfrohlings 30 des Gewindefräswerkzeugs. Das stirnseitige Ende des Werkzeugkopfrohlings 30 ist zunächst als eine kreisringförmige Stirnfläche stumpf ausgebildet. Analog dazu ist das dem Werkzeugkopf 3 zugewandte stirnseitige Ende eines (nicht gezeigten) Grundkörperrohlings zunächst als eine kreisringförmige Stirnfläche stumpf ausgebildet.

FIG. 6A bis FIG. 6E zeigen den Werkzeugkopfrohling 30, in dessen dem Grundkörper 2 zugewandtes stirnseitiges Ende ein sich stirnseitig öffnender Innenkegel 20 mit der Werkzeugachse als Kegelachse eingebracht ist. Der Innenkegel 20 kann durch ein spanabhebendes Fertigungsverfahren, beispielsweise mit Hilfe eines dem Innenkegel 20 entsprechenden konturierten Fräs-, Senk- oder Schleifwerkzeugs, oder ein spanloses Fertigungsverfahren, beispielsweise durch Erodieren, erzeugt werden. Analog dazu wird in das dem Werkzeugkopf 3 zugewandte stirnseitige Ende des Grundkörperrohlings ein identisch ausgebildeter Innenkegel eingebracht.

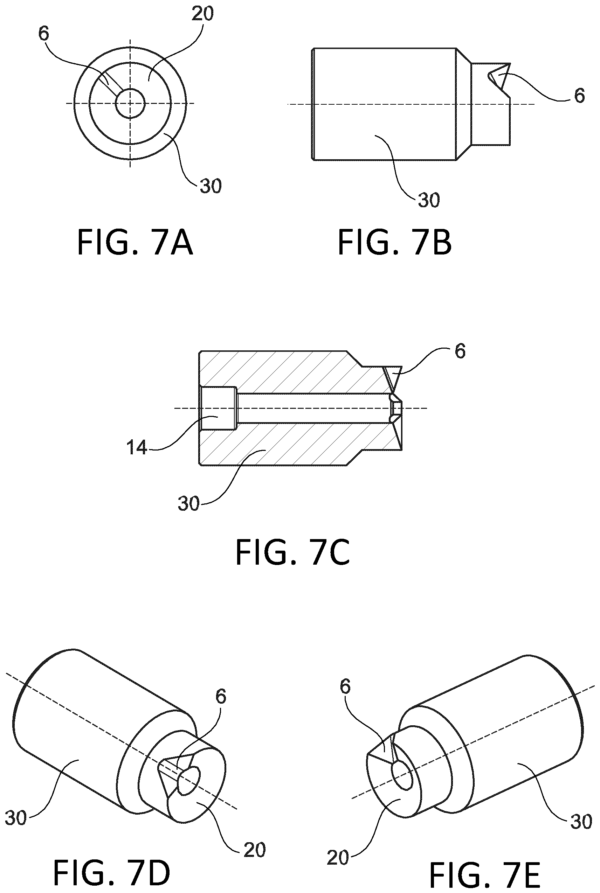

Wie es in FIG. 7A bis FIG. 9E skizziert ist, werden die mit den Innenkegeln 20 versehenen Endabschnitte des Werkzeugkopf- und Grundkörperrohlings nach und nach spanabhebend oder spanlos in der Weise weiterbearbeitet, dass eine der Zahl der Zähne 5 je Stirnverzahnung 4 entsprechende Zahl von Zahnlücken 6 ausgespart wird. Die Zahnlücken 6 können beispielsweise mit Hilfe eines dem Öffnungswinkel der Zahnlücken 6 entsprechenden konturierten Fräs- oder Schleifwerkzeugs, das von radial außen nach radial innen in die Rohlinge eingeführt wird, eingebracht werden. In der ersten Ausführungsform liegt der Öffnungswinkel β beispielsweise bei 90°. Die Zahnlücken 6 werden im Besonderen in der Weise ausgespart, dass die Grundflächen 8 der Zahnlücken 6 auf einem virtuellen Außenkegel mit der Werkzeugachse als Kegelachse liegen und konkav gerundet sind. Der Betrag des Kegelwinkels des virtuellen Außenkegels ist so groß wie der Betrag des Kegelwinkels α des Innenkegels 20.

Die nach der Ausbildung der Zahnlücken 6 verbleibenden Restkegelflächen der Innenkegel 20 bilden die Zahnkopfflächen 7 der Zähne 5 der Stirnverzahnungen 4 am Werkzeugkopf 3 und Grundkörper 2. Sofern keine weitere Nachbearbeitung der Zahnköpfe erfolgt, sind die Zahnkopfflächen 7 daher den Innenkegelflächen entsprechend konkav geformt.

Die Kopfflächen der Zähne 5 und die Grundflächen 8 der Zahnlücken 6 verlaufen daher zwar unter verschiedenen Vorzeichen, d.h. gegensinnig, aber unter einem gleich großen Winkel.

### Zweite Ausführungsform

FIG. 10A bis FIG. 10F zeigen eine zweite Ausführungsform eines modularen Zerspanungswerkzeugs 40. Die zweite Ausführungsform unterscheidet sich von der ersten Ausführungsform im Wesentlichen nur darin, dass die Stirnverzahnungen 4 am Werkzeugkopf 3 und Grundkörper 2 jeweils drei Zähne 5 bzw. Zahnlücken 6 aufweisen.

Die Zahnflanken 9 zweier in Werkzeugumfangsrichtung nebeneinanderliegender Zähne schließen einen Öffnungswinkel β von beispielsweise 120° ein, wie es in FIG. 10E gezeigt ist. Die Kegelwinkel betragen wie in der ersten Ausführungsform beispielsweise 19,64°.

Die Zahnköpfe weisen an ihren radial inneren Endabschnitten eine Abschrägung 32 auf, wie in Fig. 10D gezeigt.

Fig. 10F zeigt einen Zahn 5 und eine dem Zahn 5 diametral gegenüberliegende Zahnlücke 6. Die Zahnkopffläche 7 des Zahns 5 und die Grundfläche 8 der Zahnlücke verlaufen unter einem betragsmäßig gleich großen Winkel γ schräg zu einer Werkzeugquerschnittsebene des Zerspanungswerkzeugs.

### Modifikationen

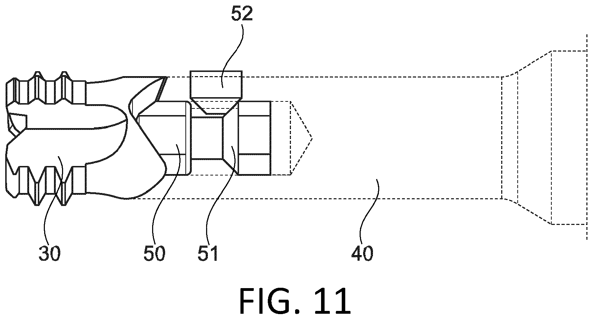

Die Fig. 11 zeigt eine modifzierte Ausführungsform, in der der Werkzeugkopf nicht mittels einer stirnseitig in den Werkzeugkopf geschraubten Spannschraube am Grundkörper befestigt ist. Stattdessen ist ein Verbindungsbolzen 50 vorgesehen, der zum einen grundkörperseitig mit dem Werkzeugkopf 30 verschraubt ist und zum anderen in einem im Grundkörper 40 ausgebildeten Sackloch verankert, beispielsweise verschraubt, ist. Der Verbindungsbolzen 50 weist eine Kegelfläche 51 auf, die mit einer Kegelfläche einer von radial außen in den Grundkörper 40 geschraubten Zylinderschraube 52 zusammenwirkt, um den Werkzeugkopf 30 mit dem Grundkörper 40 zu verspannen. Selbstverständlich kann die in die Fig. 11 gezeigte Befestigung auch bei dem Zerspanungswerkzeug der ersten Ausführungsform angewendet werden.

Das Zerspanungswerkzeug kann als ein Bohr-, Fräs-, Gewinde- oder Reibwerkzeug ausgeführt sein und demzufolge einen für eine Bohr-, Fräs-, Gewinde- oder Reibbearbeitung ausgelegten Werkzeugkopf aufweisen.

Je nach der Ausführung des Zerspanungswerkzeugs sind Spannuten nicht zwingend notwendig. Sofern das Zerspanungswerkzeug beispielsweise einen Fräskopf aufweist, d.h. keine Spannuten vorhanden sind, die über die Schnittstelle zwischen Werkzeugkopf und Grundkörper hinweg laufen, können die Stirnverzahnungen am Werkzeugkopf und Grundkörper identisch ausgebildet sein und die Zähne jeder Stirnverzahnung jeweils an einer Werkzeugmantelseite enden.

Im Falle eines Zerspanungswerkzeugs mit Spannuten können diese axial vor der Stirnverzahnung am Werkzeugkopf und Grundkörper auslaufen, wodurch die Stirnverzahnungen am Werkzeugkopf und Grundkörper identisch ausgebildet sein können.

Abweichend von der in FIG. 2A und FIG. 2B gezeigten ersten Ausführungsform können die Zähne am Werkzeugkopf und Grundkörper so verteilt sein, dass die Zahnköpfe der Stirnverzahnung am Werkzeugkopf in Werkzeugumfangsrichtung gesehen jeweils im Bereich zwischen zwei Spannuten und die Zahnköpfe der Stirnverzahnung am Grundkörper in Werkzeugumfangsrichtung gesehen jeweils im Bereich einer auslaufenden Spannut liegen.

## Patentansprüche

1. Modulares Zerspanungswerkzeug (1; 40) mit einem sich entlang einer Werkzeugachse erstreckenden Grundkörper (2) und einem über eine formschlüssige Kupplung mit dem Grundkörper (2) verbundenen Werkzeugkopf (3), wobei die formschlüssige Kupplung aus miteinander in Eingriff stehenden Stirnverzahnungen (4) am Grundkörper (2) und Werkzeugkopf (3) gebildet ist, die jeweils eine Vielzahl von um die Werkzeugachse herum äquidistant verteilten, radial verlaufenden Zähnen (5) aufweisen, **dadurch gekennzeichnet, dass**
je Stirnverzahnung (4) die Kopfflächen (7) der Zähne (5) auf einer Innenkegelfläche im Werkzeugkopf (3) oder Grundkörper (2) mit der Werkzeugachse als Kegelachse liegen, und die Kopfflächen (7) der Zähne (5) konkav gerundet sind.

2. Zerspanungswerkzeug (1; 40) nach Anspruch 1, **dadurch gekennzeichnet, dass** je Stirnverzahnung (4) die Winkelhalbierenden der Grundflächen (8) der zwischen den Zähnen (5) liegenden Zahnlücken (6) auf einer Außenkegelfläche im Werkzeugkopf (3) oder Grundkörper (2) mit der Werkzeugachse als Kegelachse liegen.

3. Zerspanungswerkzeug (1; 40) nach Anspruch 2, **dadurch gekennzeichnet, dass** der Betrag des Winkels (γ) der Außenkegelfläche relativ zu einer Werkzeugquerschnittsebene gleich dem Betrag des Winkels (γ) der Innenkegelfläche relativ zu einer Werkzeugquerschnittsebene ist.

4. Zerspanungswerkzeug (1; 40) nach einem der vorhergehenden Ansprüche, **dadurch gekennzeichnet, dass** die auf Höhe der Kopfflächen (7) der Zähne (5) gemessene Zahndicke über die jeweilige Zahnbreite der Zähne (5) hinweg gleich groß bleibt.

5. Zerspanungswerkzeug (1; 40) nach einem der vorhergehenden Ansprüche, **dadurch gekennzeichnet, dass** die Stirnverzahnungen (4) am Grundkörper (2) und Werkzeugkopf (3) ausschließlich an den Zahnflanken (9) ihrer Zähne (5) aneinander anliegen.

6. Zerspanungswerkzeug (1; 40) nach Anspruch 5, **dadurch gekennzeichnet, dass** die Axialspalte zwischen den Kopfflächen (7) der Zähne (5) und den Grundflächen (8) der Zahnlücken (6) der miteinander in Eingriff stehenden Stirnverzahnungen (4) kühlschmiermittelleitende und/oder schmutzabführende Kanäle bilden.

7. Zerspanungswerkzeug (1; 40) nach einem der vorhergehenden Ansprüche, **dadurch gekennzeichnet, dass** der Werkzeugkopf (3) durch eine mittig angeordnete Spannschraube (10), die durch ein Schraubenloch im Werkzeugkopf (3) geht und in eine Gewindebohrung im Grundkörper (2) geschraubt ist, am Grundkörper (2) befestigt ist.

8. Zerspanungswerkzeug (1; 40) nach einem der vorhergehenden Ansprüche, **dadurch gekennzeichnet, dass** die Zähne (5) der Stirnverzahnung (4) am Werkzeugkopf (3) um die Werkzeugachse herum so angeordnet sind, dass sie nach radial außen jeweils in einer am Werkzeugkopf (3) ausgebildeten Spannut (12) enden.

9. Zerspanungswerkzeug (1) nach einem der vorhergehenden Ansprüche, **gekennzeichnet durch** eine gerade Anzahl von, beispielsweise vier, Zähnen (5) je Stirnverzahnung (4).

10. Zerspanungswerkzeug (40) nach einem der vorhergehenden Ansprüche, **gekennzeichnet durch** eine ungerade Anzahl von, beispielsweise drei, Zähnen (5) je Stirnverzahnung (4).

11. Zerspanungswerkzeug (1; 40) nach einem der vorhergehenden Ansprüche, **dadurch gekennzeichnet, dass** je Stirnverzahnung (4) die Zahnflanken (9) zweier in Umfangsrichtung des Zerspanungswerkzeugs (1; 40) benachbarter Zähne (5) einen Zahnlückenöffnungswinkel (β) im Bereich von 80° bis 120° einschließen.

12. Verfahren zur Herstellung einer formschlüssigen Kupplung zwischen einem Grundkörper (2) und einem Werkzeugkopf (3) eines modularen Zerspanungswerkzeugs (1; 40) nach einem der vorhergehenden Ansprüche, **dadurch gekennzeichnet, dass**
zunächst in einen Grundkörperrohling und in einen Werkzeugkopfrohling (30) jeweils ein sich stirnseitig öffnender Innenkegel (20) mit der Werkzeugachse als Kegelachse eingebracht wird, und
anschließend in den so bearbeiteten Grundkörperrohling und Werkzeugkopfrohling (30) jeweils von radial außen nach radial innen eine Vielzahl von die Zähne (5) und die zwischen den Zähnen (5) liegenden Zahnlücken (6) formende Aussparungen eingebracht werden.
